## Europäisches Patentamt
## European Patent Office
## Office européen des brevets

(11) Publication number: **0 085 561**
**B1**

(12) **EUROPEAN PATENT SPECIFICATION**

(45) Date of publication of patent specification: **13.07.88**

(51) Int. Cl.⁴: **B 29 C 69/00, H 02 G 15/18**

(21) Application number: **83300473.2**

(22) Date of filing: **28.01.83**

(54) Bonded polymeric article.

(30) Priority: **28.01.82 GB 8202406**

(43) Date of publication of application:
**10.08.83 Bulletin 83/32**

(45) Publication of the grant of the patent:
**13.07.88 Bulletin 88/28**

(84) Designated Contracting States:
**AT BE CH DE FR IT LI NL SE**

(56) References cited:
**EP-A-0 045 212**
**EP-A-0 045 612**
**EP-A-0 046 027**
**EP-A-0 063 036**
**DE-A-1 504 803**
**FR-A-1 490 669**
**FR-A-2 337 445**
**FR-A-2 426 983**

(73) Proprietor: **RAYCHEM PONTOISE S.A.**
**2-4 Avenue de l'Eguillette Z.A. du Vert Galant**
**F-95310 Saint-Ouen l'Aumone (FR)**

(72) Inventor: **Gozlan, Gilles Remy**
**Le Mesnil Theribus**
**F-60240 Chaumont en Vexin (FR)**
Inventor: **Sovish, Richard Charles**
**Ramalea The Street**
**Lea Malmesbury Wilshire (GB)**

(74) Representative: **Benson, John Everett et al**
**Raychem Limited Intellectual Property Law**
**Department Swan House 37-39, High Holborn**
**London WC1 (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

The present invention relates to bonded polymeric articles, carrying fusible or flowable electrically conductive material for forming an electrical connection between a plurality of electrical conductors, and to a process for making such articles.

Hitherto, hollow heat-recoverable articles have generally been produced by forming a polymer into the desired heat stable configuration, simultaneously or subsequently cross-linking the polymer in its heat stable configuration, heating the article to a temperature above the crystalline melting point or softening point of the cross-linked polymer, deforming the article and cooling the article whilst in the deformed state, so that the deformed configuration is retained. In use, since the deformed state of the article is heat unstable, application of heat will cause the article to revert or tend to revert to its original heat stable configuration.

When it is desired to provide such articles with a fusible metallic insert, then in general it has hitherto frequently been necessary to provide such inserts after completion of the article on an item-by-item basis e.g. by way of a manual or semi-automatic finishing process, but such methods tend to be expensive. Frequently, moreover, the hollow articles are of such configuration that they cannot be produced directly by extrusion, for example electrical boots, udders (a term employed herein in a general sense to cover any hollow heat shrinkable article comprising at least three outlets employed in the termination of electrical cables and also commonly referred to as cable "breakouts") or end-caps (a hollow tubular article having a smoothly tapering sealed end) for electric cables, and hitherto such articles have generally been formed into the desired heat stable configuration on an item-by-item basis by moulding, e.g. by injection, compression or transfer moulding techniques. Quite apart from the added expense of such techniques, for complicated shapes, e.g. udders, distortion may be necessary to remove the articles from the moulding pin or core requiring that the articles be resiliently deformable. Furthermore, in order to render such articles heat-recoverable, such moulded parts have in general hitherto been heated and deformed into a heat unstable configuration on an item-by-item basis.

British Patent Application Publication No. 2084505 describes and claims an improved process for the production of a hollow heat-recoverable article provided with a functional insert which comprises:

(a) deforming at least part of a body of fusion bondable polymeric material at a temperature below the softening point of the material to render it heat-recoverable,

(b) disposing the solder insert in contact with an exposed portion of the body,

(c) bonding one or more parts of the body to a substrate of fusion bondable polymeric material to produce the configuration of least one hollow heat recoverable article with the functional insert located therein, and

(d) cross-linking the bond-forming parts of the deformed body and the substrate to each other.

The present invention is based on the surprising discovery that adequate bonding can be achieved through a fusible or flowable electrically conductive material such as solder. The present invention relates to a particularly efficient way of producing bonded articles carrying fusible or flowable electrically conductive material such as solder which is applicable both to heat-recoverable and non-heat-recoverable articles.

The invention accordingly provides an article for forming an electrical connection between a plurality of electrical conductors, which comprises a connector body portion which is formed from an organic polymeric material and is at least partly dimensionally heat-recoverable, the connector body portion having at least one open end so as to allow insertion of at least one conductor therein and containing a quantity of an electrically conductive material which is flowable or fusible under conditions that do not destroy the coherence of the polymeric material, the body portion being at least partly defined by a seam that has been formed by seam bonding together parts of the article through the electrically conductive material so as to displace the electrically conductive material from the resulting bonded seam.

While electrically conductive materials which are flowable at ambient temperatures could be used if suited to the intended use of the article, normally solid fusible electrically conductive materials are more often likely to be useful.

The invention also provides a process for manufacturing such an article, comprising bonding together two bodies of polymeric material or two portions of a body of polymeric material through a body of flowable or fusible electrically conductive material so as to displace the electrically conductive material from the resulting bonded polymeric seam. The polymer material may be treated, e.g. by cross-linking, to resist disintegration under conditions which fuse the electrically conductive material.

The electrically conductive material may be provided separately from the polymeric material, for example in the form of a strip. Alternatively, the electrically conductive material may be preinstalled on the polymeric material, by printing for example. Methods of printing electrically conductive tracks, for example solder tracks, on polymeric materials in this way are well known.

It will be appreciated that this invention lends itself to efficient production, since the polymeric material and the electrically conductive material may be fed continuously to apparatus which effects the seam bonding through the electrically conductive material and may otherwise finish the desired article. For example, two elongate strips of polymer with an elongate strip of the electrically conductive material sandwiched between them may be fed to apparatus which bonds the polymer at intervals on lines transverse to the direction of feed, thus producing a series of tubes lying side-by-side separated by longitudinal (relative to the tubes) bonds. Each tube will accordingly have within it a body of the electrically conductive material which has been severed from the feed stock by the bonding process.

Alternatively, the electrically conductive material may be fed along the length of a tube of polymer, or a sheet or sheets of polymer which may be bonded on lines substantially parallel to the direction of feed to form a tube and lateral bonded seams may be formed at intervals through the electrically conductive material to cut off portions of it. These lateral (relative to the tube) welds need not be rectilinear, and preferably form enclosures (cooperating if necessary with one or more longitudinal seam portions) spaced along the tube so as to permit severing of the tube between enclosures thus producing shorter tubes each containing at least one enclosure, which enclosure contains a body of the electrically conductive material and preferably extends only part of the way along and part of the way across the tube.

The enclosure may be arranged to surround completely the enclosed electrically conductive material. In this case the enclosures are designed to open and emit the electrically conductive material under suitable conditions, as hereinafter described. Alternatively, the enclosures may, for example, be arranged to surround only partly the electrically conductive material and to allow the fused or flowed electrically conductive material to pass therefrom. To this end the enclosures may have, for example, a small opening or hole communicating with the interior of the polymer tube outside of the enclosure. Preferably the hole or opening is arranged to prevent, or at least, inhibit passage of the fusible or flowable material therethrough, but to allow passage of the fused or flowed material. In this case the seams forming the enclosure may optionally be arranged to open under suitable conditions, as hereinafter described, to enhance the emission of the electrically conductive material from the enclosure.

As used herein, the term "lateral seam" is used to include seams extending in a direction across the tube, either perpendicular to the linear generatrix of tube wall or not, and may include curved or arcuate seams or rectilinear seams which merge into or meet with curved seams or longitudinal (relative to the tube) seams. "Longitudinal seams", on the other hand, means seams extending substantially parallel with the hollow conduit path of the tube, or in other words parallel with the linear generatrix of the tube, regardless of whether the tube is in an open or flattened state. It will be understood that the seams are not necessarily of uniform width or of any specific form, irregular outlines and apertures in the seams being permissible if desired.

The seam bonding may be achieved via further bonding material in addition to the said polymeric material, which further material is preferably cross-linked with the polymeric material.

Preferably, the bonding is effected by fusion of the said polymeric material.

By the expression "fusion bonding" as employed herein is meant a process wherein the material in the parts to be bonded together is caused to flow to form the bond, e.g. welding by heat, solvent or ultrasonic or radio frequency energy, preferably with the application of pressure, either to form a homogeneous bridge between the parts in the absence of any discernible interface therebetween or to fuse the parts with further material which is preferably crosslinked with the material of the said parts by the cross-linking step of the process when producing dimensionally recoverable articles.

When the present invention is practiced with the process of the aforementioned British Patent Application publication No. 2084505 the bonding (preferably fusion) step may be effected either before or after the deformation step, preferably however after the deformation step. Bonding before deformation produces the configuration of the article before it is rendered heat recoverable, and care must be taken not to break the bond or lose the insert during the subsequent deformation.

It will be understood that references to "hollow" articles include articles in a flat state which can be opened to reveal their hollow interior, and references to "tubular" articles include multi-legged, tapering, or irregular of a generally elongate hollow form, and these terms may refer to articles only part of which is hollow or tubular as aforesaid. The process is applicable to both crystalline and non-crystalline polymers, the softening point (by which is meant the crystalline melting point for crystalline polymers) being selected accordingly as the maximum deformation temperature.

By "fusion bondable" polymeric materials and substrates as employed herein is meant not cross-linked to the extent that the material cannot be readily bonded to itself or to another polymeric component by fusing. In general, the level of cross-linking in the polymeric material expressed in terms of gel content (ANSI/ASTM D2765-68) is preferably less than 40%, more preferably less than 20%, particularly less than 5%. When crosslinking in accordance with the process, preferably gel contents of at least 40%, e.g. at least 50%, particularly at least 65% are attained.

Preferably, the cross-linking cross-links substantially all of the polymeric material in addition to the bond-forming material. Cross-linking is preferably performed after the deforming and bonding steps, but could be effected after the deformation step and during the bonding step.

The polymeric material may be in the form of a web or webs and it or they may be longitudinally expanded by the deformation step. The process may be performed so as to provide a plurality of separable hollow heat-recoverable articles each having a metallic insert located therein with cross-linking effected before or after separating the articles. Other aspects of the process according to British Patent Application Publication No. 2084505 can also be adapted to use with the present invention. Hollow heat-recoverable articles produced by the process of the invention also form part of the present invention.

The process is particularly useful in the manufacture of heat-recoverable solder connector sleeves for electrical applications, e.g. electrical cables, the use of such products being extensive and well reported in the literature. The articles may be formed by welding together at least two super-imposed flaps of a single folded pre-stretched polymeric web, which may be deformed in any direction which will provide the desired direction of recovery in the final product, which is preferably substantially only radially inward shrinkage in relation to the substrate to which they are applied, that is in the substantial absence of shrinkage longitudinally (e.g. less than 30%, preferably less than 10%, longitudinal shrinkage when fully radially recovered) in relation to said substrate. Such shrinkage may be achieved by mono-axial deformation of the polymeric material.

The electrically conductive material is preferably solder, but electrically conductive materials not conventionally regarded as solders may be used if suitably related to the available polymer properties, for example an adhesive such as a hot melt adhesive, loaded with metallic particles such as silver flake. When the electrically conductive material is required to make electrical connection to a wire or other conductor, an appropriate amount of flux may be present.

Since it is intended that the fusible metallic material will be fused in use of the finished article, any polymeric material which is or can be rendered capable of withstanding the fusion conditions may be used. For dimensionally recoverable articles, any cross-linkable polymeric material to which the property of dimensional recoverability may be imparted such as those disclosed in U.K. Specification No. 990,235 may be used. Polymers which may be used in the polymeric material include polyolefins such as polyethylene and polypropylene, and ethylene copolymers, for example with propylene, butene, hexene, octene, vinyl acrylate or other vinyl esters or methyl or ethyl acrylate, polyamides, polyurethanes, polyvinyl chloride, polyvinylidine fluoride, or other fluorinated polymers or copolymers, e.g. Tefzel (trade name - commercially available from DuPont), elastomeric materials such as those disclosed in U.K. specification No. 1,010,064 and blends such as those disclosed in U.K. No. 1,010,064 and blends such as those disclosed in U.K. specification Nos. 1,284,082 and 1,294,665, and compositions such as those disclosed in our co-pending Applications Nos. 15122/77 and 37468/78. The polymeric materials can be tailored to suit the intended use by the addition of fillers, e.g. semi-conducting fillers or anti-tracking agents, flame retardants, plasticisers, pigments, stabilisers and lubricants, or where necessary, e.g. where the polymeric material is substantially non-crystalline, a hold-out agent such as a thermoplastic polymer, e.g. poly- ethylene, may be included in the material. Where a fusible electrically conductive material is used this will preferably have a fusion temperature lower than the temperature which would in practice destroy the coherence of the polymeric material in the actual article being formed, but the polymeric material need not be totally resistant to the end-product fusion conditions at the time of bonding if suitable techniques of bonding are used to displace the electrically conductive material without unacceptably affecting the article. For example, fusion bonding of the polymer seams may involve localised heating to temperatures which could destroy the article if applied to its entire surface.

The polymeric material may be cross-linked by irradiation, for example, by means of an electron beam or by gamma radiation or it may be chemically cross-linked. Whichever cross-linking process is used, it may be advantageous to incorporate one or more co-curing agents for example polyunsaturated monomers such as triallyl cyanurate, triallyl isocyanurate, diallyl phthalate, ethylene glycol dimethacrylate, trimethylol-propane trimethacrylate, pentaerythritol tetra-methacrylate, allyl methacrylate and vinyl methacrylate. One method of chemical cross-linking that may be used in the process according to the invention involves grafting an unsaturated hydrolysable silane on the polymer and subjecting the article to moisture during a curing stage, for example, as described in U.K. patent specification Nos. 1,236,460 and 1,357,549.

Any of the techniques conventionally employed for fusing together polymeric materials may be employed in the process of the present invention, e.g. radio frequency, ultrasonic or hot bar welding, and pressure may additionally be applied to ensure satisfactory displacement of the metallic material from the seam. Furthermore, it is possible to make use of the fusing operation to separate the articles one from another or from surplus polymeric starting material. For example, it is possible to use a heat/cutting device such as a hot wire cutter or a laser beam, if necessary in association with pressure applying means such as a roller.

As hereinbefore described, the process is particularly appropriate in the production of hollow heat-recoverable sleeves for use in the electrical field. In general, such products are characterised by a wall thickness before heat recovery thereof of preferably from 0.1 to 5 mm, especially from 0.5 to 3 mm e.g. 1 to 3.

Some specific embodiments of the present invention will now be described by way of example with reference to the accompanying drawings wherein:-

Figure 1 shows in section a layer of solder sandwiched between two polymer sheets ready for bonding according to the present invention;

Figure 2 shows in section a schematic representation of the resulting bonded products;

Figure 3 shows two sheets of polymer material ready for bonding according to the present invention;

Figure 4 shows a bonded product resulting from one pattern of bonding the structure of Figure 3;

Figure 5 shows schematically part of the structure of Figure 4 viewed along the arrows A;

Figure 6 shows a tube of polymer material having a wire or rod of solder positioned therein ready for bonding according to the present invention;

Figure 7 shows the tube of Figure 6 after bonding;

Figure 8 shows a connector sleeve severed from the structure of Figure 7;

Figure 9 shows a connector sleeve similar to that of Figure 8;

Figure 10 shows a two-legged sleeve producible by a method similar to that illustrated in Figures 6 to 9;

Figure 11 shows a three-legged sleeve analogous to the two-legged sleeve of Figure 10;

Figures 12 and 13 show schematically a multi-tube connector according to the invention; and

Figure 14 is an exploded view of a multiple wire termination device according to the invention.

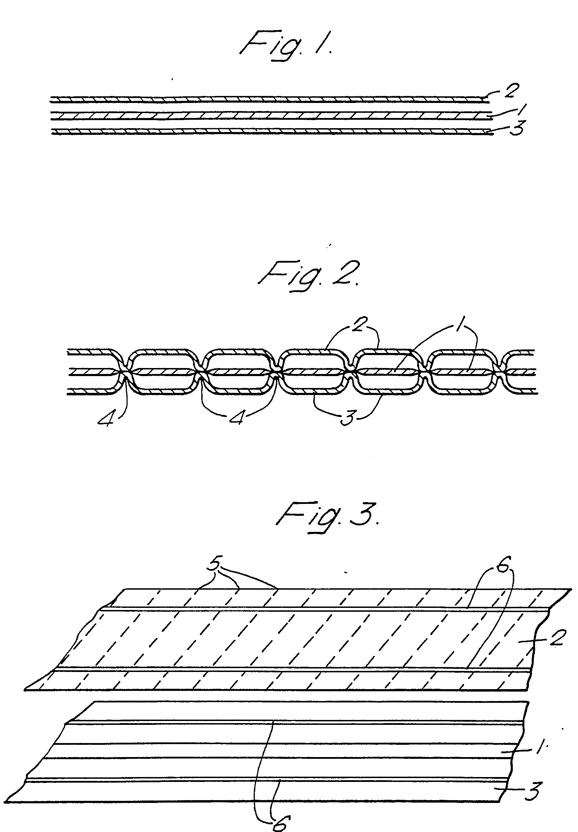

Referring to the drawings, Figure 1 shows an elongate body of solder 1 sandwiched between layers of polymer 2 and 3. It will be understood that this sandwich assembly can be fed longitudinally, e.g. from left to right as illustrated, to bonding equipment which bonds the two polymer films together at intervals through the solder, thus displacing the solder from the resulting bond in accordance with the invention, to produce a structure schematically illustrated in Figure 2. The bond areas 4 illustrated in Figure 2 can be produced surprisingly free of residual solder by use of appropriate bonding techniques, temperatures, and pressures.

The resulting product thus constitutes a train of polymeric tubes lying side-by-side, each enclosing a body of solder, which solder can be fused under conditions which do not fuse the polymeric material. The polymeric material can thus serve to localise and contain the fused solder, and this is useful in a number of applications, especially for making electrical connections. Appropriate polymer films may be rendered dimensionally recoverable, for example by cross-linking as aforementioned, such recovery further localising and containing the molten solder. This is particularly advantageous when heat recoverable polymers are used, since the recovery temperature can be selected to suit the solder fusion temperature, as is well known for heat shrinkable solder containing connectors, e.g. those sold by Raychem under the trademark "Solder Sleeve".

Figure 3 shows two sheets of substantially transparent polymeric material 2 and 3, as before, with a strip of solder 1 in contact with the upper surface of sheet 3. Dotted lines 5 indicate the position of bond lines to be formed in order to bond the two sheets together through the solder, thus forming a structure like that of Figure 2. Fusible sealing material 6 is shown in two strips on the sheet 3, and on the underside of sheet 2, to provide end seals for the resulting sleeves when heated to melt the solder body within each individual sleeve. Such fusible sealing materials are known in heat recoverable solder containing connectors, which may be prepared, for example, by use of pre-stretched sheets of polymer which are subsequently bonded and cross-linked as described in our aforementioned co-pending British patent Application, or by techniques involving deformation of the sheets above the polymer crystalline melting point or softening point after cross-linking, for example as described in British Patent Application Publication No. 2084587, the disclosure of which is incorporated herein by reference.

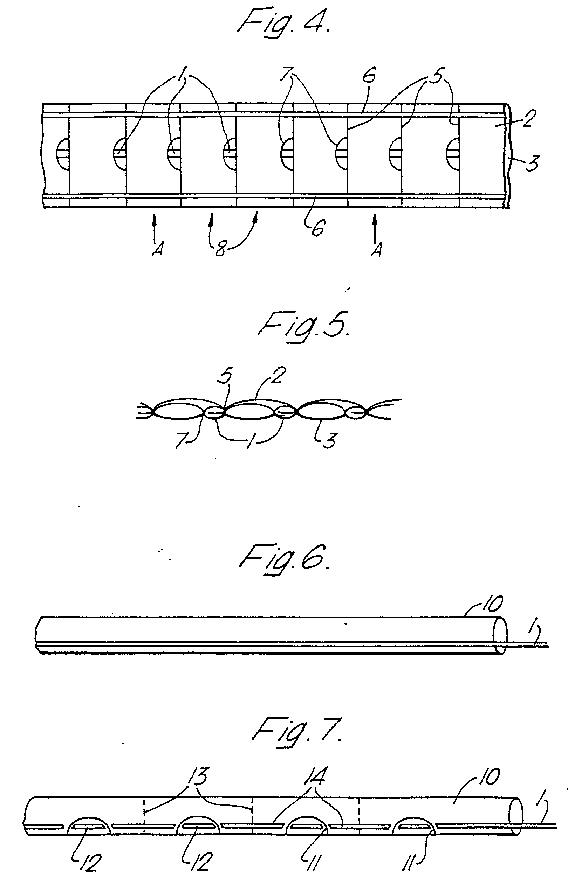

Figure 4 shows in plan view a pair of substantially transparent sheets like those of Figure 3 with the additional feature of a crescent-shaped bond line 7 adjacent to the straight tube forming bond 5, thus forming an enclosure in each resulting tube which enclosure extends only part way across and part way along each of the tubes, and encloses a portion of the solder 1, the surplus portions of the solder strip 1 which are cut off by the curved bond line 7 being removable through the open ends 8 of the tubes.

The curved welds are arranged to open or be openable under conditions which fuse the solder, thus allowing the molten solder to pass into the main body of the tube. This may be achieved by suitably adjusting the welding conditions and/or by providing a strengthening (e.g. cross-linking) agent along the straight welds so that these will be stronger than the curved welds, or by welding the straight seams 5 before cross-linking the polymeric material and welding the curved seams 7 after cross-linking, as described and claimed in British Patent Application Publication No. 2096412 for dimensionally recoverable articles.

Figure 5 shows schematically a portion of the structure in Figure 4 with the transparent tube walls slightly separated to illustrate the eccentric positioning of the solder portions 1 within each of the resulting tubes.

It will be appreciated that this technique has the advantage of guaranteeing a portion of solder being present in each of the tubes, this being occasionally difficult to guarantee with other methods of preparing eccentrically disposed solder inserts, e.g. by pressing small balls of solder into the surface of the polymer sheets. It is also possible with the procedure of the present invention to produce various shapes of solder insert by bonding along appropriate outlines, as may be required for certain end applications.

Figure 6 shows a tube 10 of polymeric material containing an elongate body of solder 1, which polymer tube could be a continuously extruded tube, or alternatively could be formed by welding together opposable edges of a single polymer sheet or two respective edges of two polymer sheets.

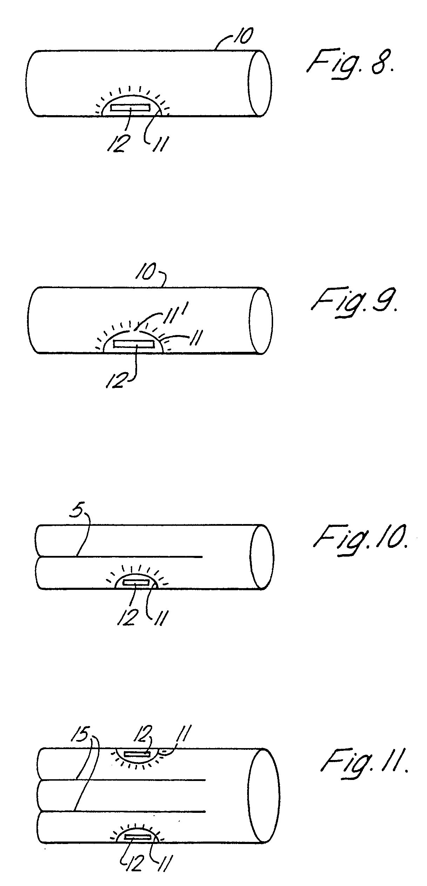

Figure 7 shows the tube of Figure 6 after bonding through the solder 1 along crescent shaped lines 11 to produce a series of enclosures spaced along the tube, each enclosure being operable as previously indicated and containing a body of solder 12 cut off from the elongate body 1. Broken lines 13 indicate the points at which the tube may be severed to produce individual solder containing sleeves as indicated in Figure 8. The portions 14 of the solder body 1 which are cut off inbetween the enclosures can be recovered via the open ends of the tube and can accordingly be recycled to minimise material costs.

Figure 9 shows an embodiment similar to that of Figure 8. In this case however the tube 10 of polymeric material has been bonded along broken crescent shaped lines 11 to form an enclosure that does not completely surround the enclosed body of solder 12. A small gap 11' exists towards the centre of the crescent shaped line 11'. The gap 11' is too small to permit the solid solder body 12 to escape from the enclosure but is large enough to permit the solder to pass therethrough when it is fused. In this embodiment it is not necessary, although it may be preferred, for the enclosure to be openable to allow molten solder to pass into the tubular body.

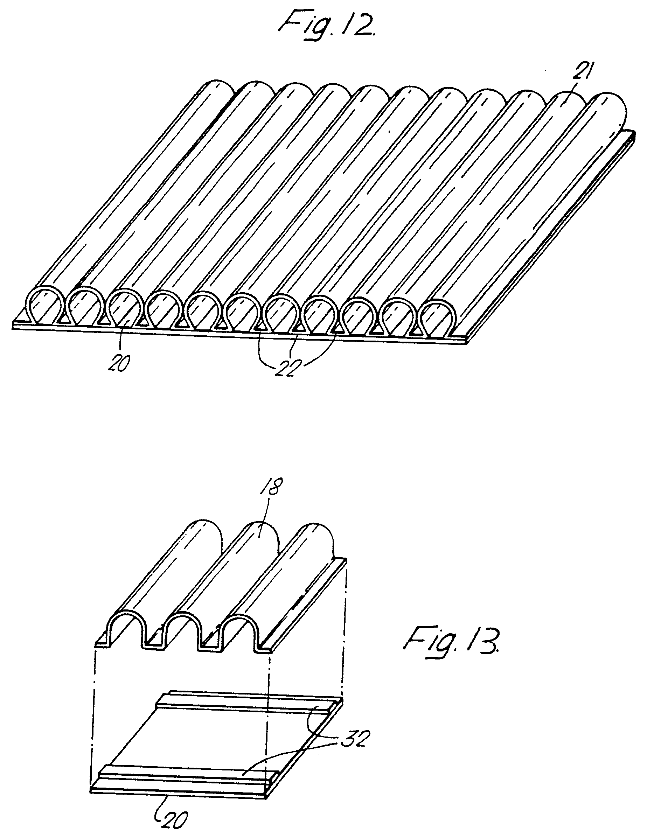

Figure 10 shows a two-legged tube corresponding in principle to that of Figure 8, and Figure 11 shows a three-legged tube similarly corresponding in principle. The bonds 15 separating the legs of the sleeves according to Figures 10 and 11 can be formed by known techniques.

The use of the present invention to improve other solder containing connector products is illustrated by Figures 12 to 14. Figure 12 illustrates a multiple tube connector of the kind described and claimed in British Patent Application Publication No. 2082109, in which an upper polymer sheet 21 having tubular deformations is bonded to a lower non-deformed sheet 20 along bond lines 22. It will be appreciated that a continuous strip of solder laid in contact with the lower sheet 20 before the bonding operation according to the present invention will produce solder inserts in each of the tubes localised on the lower sheet, which may be extremely convenient for some purposes.

Figure 13 is an exploded view illustrating this principle more clearly, a deformed upper sheet 18 being shown ready for bonding to lower sheet 20, which carries two solder strips 32, the number of such strips not being critical to the practice of this invention.

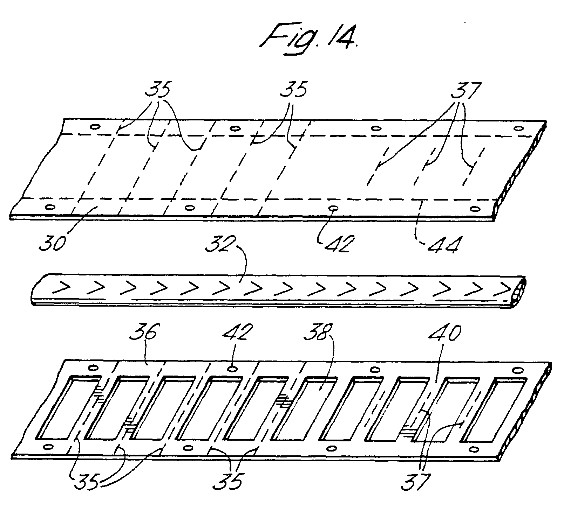

Figure 14 is an exploded view of a multiple wire termination device having windows 38 in a polymer sheet, which windows tend to localise molten solder upon terminals to which electrical connection is to be effected, the solder being provided as a continuous strip 32. A cover sheet 30 is provided and this is normally attached to the windowed sheet be spot welds 42, as described and claimed in our co-pending British Patent Application Publication No. 2077170. The present invention improves the reliability of this device by providing bonds through the solder between adjacent windows, as indicated by broken lines 35 (full width) or 37 (solder width) thus separating the strip of solder 32 into individual portions isolated in association with the respective windows 38. This greatly reduces the risk of electrical short circuits which could be caused in use by residual solder forming bridging electrical connections between the respective windows 38.

## Claims

1. An article for forming an electrical connection between a plurality of electrical conductors, which comprises a connector body portion which is formed from an organic polymeric material and is at least partly dimensionally heat-recoverable, the connector body portion having at least one open end (8) so as to allow insertion of at least one conductor therein and containing a quantity of an electrically conductive material (1, 12, 32) which is flowable or fusible under conditions that do not destroy the coherence of the polymeric material, the body portion being at least partly defined by a seam (4, 5, 7, 11, 22) that has been formed by seam bonding together parts of the article through the electrically conductive material so as to displace the electrically conductive material from the resulting bonded seam.

2. An article according to claim 1, wherein the polymeric material is in the form of an elongate tube having at least one longitudinal seam (4, 5, 22) bonded through the electrically conductive material and the said body of electrically conductive material (1, 32) is inside the tube.

3. Two or more articles according to claim 2 joined together side-by-side with a said seam (4, 5, 22) between adjacent articles.

4. An article according to claim 1, wherein the polymeric material is in the form of a tube having at least one lateral seam (7, 11) formed by bonding together opposable portions of the tubular wall through the electrically conductive material and the electrically conductive material (1, 12) is inside the tube.

5. An article according to claim 4 wherein the lateral seam (7, 11) forms an enclosure extending only part of the way along and part of the way across the tube, and the electrically conductive material (1, 12) is inside the enclosure.

6. An article according to claim 5, wherein the enclosure comprises an opening (11') that can allow passage of the flowed or fused electrically conductive material therethrough.

7. An article according to any one of claims 4 to 6 wherein the lateral seam is arranged to open when the article is subjected to conditions of fusion or flowing of the electrically conductive material without fusing the polymeric material.

8. An article according to any of the preceding claims wherein the polymeric material has been cross-linked and dimensionally deformed to render it heat-recoverable.

9. An article according to claim 8 wherein the polymeric material has been deformed at a temperature below its crystalline melting or softening point before or during the seam bonding and has been cross-linked after the seam bonding, thereby strengthening the seams.

10. A process for manufacturing an article acccording to any of the preceding claims, comprising bonding together two bodies (2, 3, 20, 21) of polymeric material or two portions of a body of polymeric material through a body of flowable or fusible electrically conductive material (1, 32) so as to displace the electrically conductive material from the resulting bonded seam (4, 5, 7, 11, 22).

11. A process according to claim 10, wherein the body or bodies of polymeric material and the electrically conductive material are fed continuously to apparatus which seam bonds the polymeric material through the electrically conductive material.

**Patentansprüche**

1. Gegenstand zur Bildung einer elektrischen Verbindung zwischen einer Mehrzahl von elektrischen Leitern, der ein Verbinderkörperteil aufweist, der aus einem organischen, polymeren Material ausgebildet ist und der wenigstens teilweise in den Abessungen wärmerückstellbar ist, wobei das Vebinderkörperteil wenigstens ein offenes Ende (8) hat, so daß wenigstens ein Leiter in dieses eingeführt werden kann und eine Menge eines elektrisch leitenden Materials (1, 12, 32) enthält, das unter Bedingungen fließfähig oder schmelzbar ist bei denen die Kohärenz des polymeren Materials nicht zerstört wird und wobei das Körperteil wenigstens teilweise durch einen Saum (4, 5, 7, 11, 22) begrenzt wird, der durch eine Saumverbindung gebildet wurde, bei der Teile des Gegenstandes durch das elektrisch leitende Material derart verbunden werden, daß das elektrisch leitende Material von dem sich ergebenden Verbindungssaum verdrängt wird.

2. Gegenstand nach Anspruch 1, bei dem das polymere Material in Form eines länglichen Rohres ausgelegt ist, das wenigstens einen Längssaum (4, 5, 22) hat, der durch das elektrisch leitende Material verbunden ist und bei dem der Körper aus elektrisch leitendem Material (1, 32) sich im Innern des Rohres befindet.

3. Zwei oder mehrere Gegenstände nach Anspruch 2, die nebeneinanderliegende Anordnung miteinander durch einen solchen Saum (4, 5, 22) zwischen benachbarten Gegenständen verbunden sind.

4. Gegenstand nach Anspruch 1, bei dem das polymere Material in Form eines Rohres ausgelegt ist, das wenigstens einen Quersaum (7, 11) hat, der dadurch gebildet wird, daß gegenüberliegende Abschnitte der Rohrwand durch das elektrisch leitende Material verbunden sind, und bei dem das elektrisch leitende Material (1, 12) sich im Innern des Rohrs befindet.

5. Gegenstand nach Anspruch 4, bei dem der Quersaum (7, 11) eine Umhüllung bildet, die sich nur über einen Teil in Längsrichtung und Querrichtung des Rohres erstreckt und bei dem das elektrisch leitende Material (1, 12) sich im Innern der Umhüllung befindet.

6. Gegenstand nach Anspruch 5, bei dem die Umhüllung eine Öffnung (11') aufweist, die den Durchgang des fließenden oder erschmolzenen elektrisch leitenden Materials durch diese ermöglicht.

7. Gegenstand nach einem der Ansprüche 4 bis 6, bei dem der Quersaum derart angeordnet ist, daß er sich öffnet, wenn der Gegenstand solchen Bedingungen ausgesetzt wird, daß das elektrisch leitende Material zum Schmelzen oder Fließen kommt, ohne daß das polymere Material schmilzt.

8. Gegenstand nach einem der vorangehenden Ansprüche, bei dem das polymere Material vernetzt und in den Abmessungen verformt ist, um es wärmeerholbar zu machen.

9. Gegenstand nach Anspruch 8, bei dem das polymere Material bei einer Temperatur unterhalb seines Kristallschmelzpunktes oder Erweichungspunktes vor oder während der Saumverbindung verformt wurde und nach der Saumbindung vernetzt wurde, um die Saumteile zu verstärken.

10. Verfahren zum Herstellen eines Gegenstandes nach einem der vorangehenden Ansprüche, das aufweist, daß zwei Körper (2, 3, 20, 21) aus polymerem Material oder zwei Teile eines Körpers aus polymerem Material durch einen Körper aus fließfähigem oder schmelzbarem, eletrisch leitendem Material (1, 32) miteinander verbunden werden, so daß das elektrisch leitende Material von dem sich ergebenden Verbindungssaum (4, 5, 7, 11, 22) verdrängt wird.

11. Verfahren nach Anspruch 10, bei dem der Körper oder die Körper aus polymerem Material und das elektrisch leitende Material kontinuierlich einer Vorrichtung zugeführt werden, die das polymere Material durch das elektrisch leitende Material mittels einer Saumverbindung verbindet.

**Revendications**

1. Article servant à établir une connexion électrique entre une pluralité de conducteurs électriques, et comportant une partie formant corps de connecteur qui est réalisée en un matériau polymérique organique et est apte à retrouver au moins partiellement ses dimensions sous l'action de la chaleur, la partie formant corps du connecteur comportant au moins une extrémité ouverte (8) de manière à permettre l'insertion d'au moins un conducteur dans cette ouverture, et contenant une quantité de matériau électriquement conducteur (1, 12, 32) qui est apte à s'écouler ou est fusible dans des conditions qui ne détruisent pas la cohérence du matériau polymérique, la partie formant corps étant au moins partiellement définie par une ligne de liaison (4, 5, 7, 11, 22) qui a été formée par réunion, selon une ligne de liaison, de parties de l'article, à travers le matériau électriquement conducteur, de manière à déplacer ce matériau électriquement conducteur hors de la ligne de liaison obtenue.

2. Article selon la revendication 1, dans lequel le matériau polymérique possède la forme d'un tube allongé comportant au moins une ligne de liaison longitudinale (4, 5, 22) formée à travers le matériau électriquement conducteur, et ledit corps constitué par le matériau électriquement conducteur (1, 32) est situé à l'intérieur du tube.

3. Deux ou plusieurs articles selon la revendication 2, réunis les uns aux autres côte-à-côte au moyen de ladite ligne de liaison (4, 5, 22) entre des articles voisins.

4. Article selon la revendication 1, dans lequel le matériau polymérique se présente sous la forme d'un tube possédant au moins une ligne de liaison latérale (7, 11) formée par la réunion de parties opposées de la paroi tubulaire, à travers le matériau électriquement conducteur, et ce matériau électriquement conducteur (1, 12) est situé à l'intérieur du tube.

5. Article selon la revendication 4, dans le quel la ligne de liaison latérale (7, 11) forme une enceinte s'étendant uniquement sur une partie de l'étendue longitudinale du tube et sur une partie de l'étendue transversale du tube, et le matériau électriquement conducteur (1, 12) est situé à l'intérieur de l'enceinte.

6. Article selon la revendication 5, dans lequel l'enceinte comporte une ouverture (11') qui peut permettre le passage du matériau électriquement conducteur amené à l'état fluide ou fondu.

7. Article selon l'une quelconque des revendications 4 à 6, dans lequel la ligne de liaison latérale est disposée de maniére à s'ouvrir lorsque l'article est soumis à des conditions dans lesquelles le matériau électriquement conducteur fond ou s'écoule, sans faire fondre le matériau polymérique.

8. Article selon l'une quelconque des revendications précédentes, dans lequel le matériau polymérique a été réticulé et est déformé, du point de vue dimensionnel, de manière à être apte à reprendre sa forme sous l'action d'une chaleur.

9. Article selon la revendication 8, dans lequel matériau polymérique a été déformé à une température inférieure à son point de fusion cristalline ou de ramollissement avant ou pendant la réunion au moyen de lignes de liaison et a été réticulé après la réunion ai moyen de lignes de liaison, ce qui renforce les lignes de liaison.

10. Procédé pour fabriquer un article selon l'une quelconque des revendications précédentes, consistant à relier ensemble deux corps (2, 3, 20, 21) réalisés en un matériau polymérique ou de parties d'un corps réalisées en un matériau polymérique, à travers un corps réalisé en un matériau électriquement conducteur (1, 32) apte à s'écouler ou fusible, de manière à refouler le matériau électriquement conducteur hors de la ligne de liaison (4, 5, 7, 11, 22) obtenue.

11. Procédé selon la revendication 10, selon lequel le ou les corps réalisés en matériau polymérique et le matériau électriquement conducteur sont délivrés de façon continue à un appareil qui réalise la réunion du matériau polymérique suivant des lignes de liaison à travers le matériau électriquement conducteur.

*Fig. 1.*

*Fig. 2.*

*Fig. 3.*

1

Fig. 4.

Fig. 5.

Fig. 6.

Fig. 7.

Fig. 8.

Fig. 9.

Fig. 10.

Fig. 11.

Fig. 12.

Fig. 13.

*Fig. 14.*